# EUROPEAN PATENT SPECIFICATION

(11) **EP 3 418 220 B1**
(45) Date of publication and mention of the grant of the patent: **21.07.2021**
(21) Application number: 17177187.6
(22) Date of filing: 21.06.2017
(51) Int. Cl.: B66F 9/06, B66F 9/07, B65G 1/04, B65G 1/06

(54) **A TRANSPORT CART OF A STORAGE AND RETRIEVAL SYSTEM AND A LIFTING ARRANGEMENT FOR SUCH A TRANSPORT CART**
TRANSPORTWAGEN EINES LAGERVERWALTUNGSSYSTEMS UND HUBANORDNUNG FÜR SOLCH EINEN TRANSPORTWAGEN
CHARIOT DE TRANSPORT D'UN SYSTÈME DE STOCKAGE ET DE RÉCUPÉRATION ET DISPOSITIF DE LEVAGE POUR UN TEL CHARIOT DE TRANSPORT

(43) Date of publication of application: 26.12.2018
(73) Proprietor: Swisslog-Accalon AB, 59012 Boxholm (SE)
(72) Inventor: BIRGERSSON, Peter, 591 46 Motala (SE); CARLSSON, Kent, 590 12 Boxholm (SE)
(74) Representative: Bergenstråhle & Partners AB

(56) References cited:
- EP-A1- 0 528 072
- EP-A1- 1 939 114
- EP-A2- 2 951 109
- IT-A1- UD20 130 162

## Description

### Technical field

The present invention relates generally to storage and retrieval systems. More specifically, the invention relates to a transport cart of a storage and retrieval system and to a lifting arrangement for such a transport cart.

### Background art

In for example large storage halls, there is a need for a storage and retrieval system for transporting goods stored at different positions of the storage hall, out of the storage hall or to a different part of the storage hall, as well as for transporting incoming goods to a certain position of the storage hall where it is to be stored. An example of such a storage and retrieval system is described in US patent application US 2017/0101264. This storage and retrieval system has a plurality of aisles running in the x-direction and a plurality of rows running in the y-direction so that different storage positions of the storage hall can be reached via the aisles and rows. The storage and retrieval system further has a plurality of floors, each floor comprising such aisles and rows extending at different altitudes. The storage and retrieval system further comprises an elevator assembly for transporting goods between the floors. The aisles and rows each comprises rails arranged along aisles and rows, for carrying transport carts that are arranged to travel along the aisles and rows in order to reach a certain position in the storage and retrieval system.

When a pallet of goods is received at the storage and retrieval system of US 2017/0101264, a pallet that is to be stored at a designated position in the storage hall, the storage and retrieval system transports the pallet to the correct floor using the elevator. Thereafter, aisle carts move the pallet with loads along the aisles to and from the elevators, and row carts move the pallets from the aisle carts along the rows.

Another example is presented in EP 0528 072 A1, which discloses a lifting table which may be used in a storage retrieval system, which lifting table comprises a rotatable cam mechanism which is attached to a lever pair of lifting scissors and acts against a base frame or a platform of the lifting EP 0528 072 A1 discloses the preamble to claim 1.

Yet another example is presented in EP 1 939 114 A1 which discloses a device for automatic storage of a load unit along a storage rail of an automated warehouse. The device comprises a chassis with a plurality of wheels, a platform and first and second moving means, where the first moving means is connected to the wheels and the second moving means is connected to the platform.

When pallets of goods are to be transported to and from a storage position of such a storage hall, there is a need to lift pallets from the storage position and onto the row cart as well as from the row cart onto the storage position. There is also a need to lift the pallet on and off at other places of the storage and retrieval system, such as from the row cart or aisle cart and into the elevator, and, when the pallet is at the floor level, to lift the pallet out of or into the elevator.

Such a pallet lift needs to be performed as a straight up and down movement that keeps the pallet in a horizontal position. In other words, the pallet is not allowed to be tilted in any way. Also, as the pallet loaded with goods could be considerably heavy, a lifting arrangement performing such a lift needs to be able to lift considerably heavy loads. Consequently, there is a need for a lifting arrangement of a storage and retrieval system that can perform straight up and down movements of heavy loads.

### Summary of invention

It is an object of the invention to address at least some of the problems and issues outlined above. It is an object of embodiments of the invention to achieve a lifting arrangement of a storage and retrieval system that can perform straight up and down movements of heavy loads. It is possible to achieve these objects and others by using a lifting arrangement and a transport cart as defined in the attached independent claims.

According to a first aspect, a lifting arrangement of a transport cart of a storage and retrieval system is provided. The lifting arrangement comprises a lifting drive shaft having a first end and a second end, a lifting driving arrangement connected to the lifting drive shaft for rotating the lifting drive shaft, and a first and a second eccentric, the first eccentric being fixed to the first end of the lifting drive shaft and the second eccentric being fixed to the second end of the lifting drive shaft. The lifting arrangement further comprises a first and a second linkage system, each having a first part and a second part distant to its respective first part, the second part of the first linkage system is connected to the first part of the first linkage system via a first link arm, and the second part of the second linkage system is connected to the first part of the second linkage system via a second link arm. The first and/or second link arm could be substantially rigid, and/or preferably hinged or flexibly mounted at both ends of the arm to the first and second parts of the linkage systems, respectively. The first and the second parts are rotatably mounted to the chassis of the transport cart, respectively, wherein the axis of rotation could be substantially or exactly parallel to an axis of the lifting drive shaft. Preferably, the first and the second parts could be each arranged to a respective link-turning shaft connectable to the chassis of the transport cart in such a way that the first and second parts are rotatable around an axis defined by its respective link-turning shaft. Further, a periphery of the first eccentric bears against the first part of the first linkage system and a periphery of the second eccentric bears against the first part of the second linkage system so that when the lifting drive shaft rotates the first and the second eccentric, the periphery of the first eccentric urges a reciprocating movement onto the first linkage system and a periphery of the second eccentric urges a reciprocating movement onto the second linkage systems so that the respective first and second parts turn back and forth around the axis oriented substantially parallel to the axis of the lifting drive shaft.

An eccentric is a circular wheel or disc having a rotational axis displaced from its center. Hereby, when the eccentric is driven to rotate around its rotational axis, the wheel or disc seems to wobble. When arranging another part on the periphery of such an eccentric, the part not following the rotational movement of the eccentric, this part performs a linear reciprocating movement as a result of the rotational movement of the eccentric. For example, when the eccentric rotates 360 degrees, the part arranged on the periphery moves from a starting position up to a highest position and down to a lowest position and back to the starting position again. As for the invention, a first part of a linkage system is arranged to the periphery of the eccentric and at the same time the first part is rotatably mounted to the chassis at a position displaced from the position where the first part is in contact with the periphery of the eccentric. As a result, when the eccentric rotates 360 degrees as above, the first part is moved back and forth, e.g. up and down, but at the same time the first part turns around an axis oriented substantially parallel to an axis of the lifting drive shaft, resulting in a reciprocating movement around the axis oriented substantially parallel. Also, as the second part of the linkage system is connected to the first part via a link arm, and is rotatably mounted to the chassis, the second part will perform a similar reciprocating movement around its rotation axis. The result is a synchronized reciprocating movement back and forth of the first and the second part of the linkage system when the eccentric is rotated. As there are similar linkage systems at both ends of the lifting drive shaft, when the lifting drive shaft is rotated, the first and the second eccentrics are rotated and the first and second parts of the first and second linkage system perform a synchronized reciprocating movement back and forth, (when in use this will be an up and down movement). As a result, a carrier plate arranged on top of the first and second parts of the first and second linkage systems will perform an up and down movement but staying horizontal during the movement. Such a movement is used to move such a carrier plate e.g. upwards from a lowest position to a highest position by turning the lifting drive shaft 180 degrees. At the highest position, goods arranged on the carrier plate may for example be moved away from the carrier plate and/or other goods may be moved onto the carrier plate. When the moving of goods is finished, the carrier plate may be moved back from its highest position to the lowest position again, by turning the lifting drive shaft another 180 degrees in the same direction. As a result, a controlled and secure movement is achieved. Also, it is very beneficial that the carrier plate can be moved from its lowest to its highest position and back again to its lowest position by turning the lifting drive shaft in the same direction. In other words, the motor can drive the lifting drive shaft in the same direction all the time, and does not have to alter direction, for performing the movement of the carrier plate between the lowest and highest positions.

According to an embodiment, the first and the second parts of the first and the second linkage system are arranged to their respective link-turning shaft at a first end-part of the respective first and second parts of the first and second linkage system, which first end-part of the first part of the first linkage system is spaced apart from a position of the first part where the periphery of the first eccentric bears against the first part of the first linkage system, and which first end-part of the first part of the second linkage system is spaced apart from a position of the first part of the second linkage system where the periphery of the second eccentric bears against the first part of the second linkage system.

According to another embodiment, the first parts and the second parts of the first and second linkage system each has a turning shaft displaced from its respective first end-part, wherein the respective first and second link arm connects the turning shaft of the first part with the turning shaft of the second part. Such an arrangement makes it possible to achieve a simultaneous back and forth movement of the second part with the first part via the link arm at the same time as the ends of the link arm can turn around the turning shafts so as to keep the simultaneous movement and a substantially horizontal position of the link arm.

According to another embodiment, a distance between the turning shaft of the first part and the first end-part of the first part of the respective first and second linkage system is approximately the same as a distance between the turning shaft of the second part and the first end-part of the second part of the respective first and second linkage system. Hereby, it is assured that the first and the second parts of the respective first and second linkage system are lifted the same distance upwards so that a carrier plate put on top of the first and second linkage system is kept horizontal.

According to another embodiment, the position of the first part of the first linkage system where the periphery of the first eccentric bears against the first part of the first linkage system lies between the first end-part and the turning shaft of the first part of the first linkage system. Further, the position of the first part of the second linkage system where the periphery of the second eccentric bears against the first part of the second linkage system lies between the first end-part and the turning shaft of the first part of the second linkage system. The position lying between the first end-part and the turning shaft signifies that there is a shorter distance from the position to the first end-part and from the position to the turning shaft than the distance from the first end-part to the turning shaft. In one exemplary embodiment the position lies approximately on a straight line between the position of the hole of the first end-part where the link-turning shafts are arranged and the turning shafts. By positioning the eccentrics so that they bear against the first parts of the linkage systems at a position between their first end-parts, where the first parts are rotationally arranged to the chassis, and their rotational turning shafts, a rather high gear is achieved from the rotation of the eccentrics. In other words, by such a positioning of the eccentrics, a larger displacement is achieved of the turning shaft part of the first parts than if the eccentrics would have been positioned at the turning shaft part. For this reason, smaller eccentrics could be selected compared to if the eccentrics would have been positioned at the turning shaft parts.

According to another embodiment, the first and the second parts of the respective first and second linkage system each has freely rotating wheels arranged for receiving a carrier plate for carrying goods to be transported on the transport cart. By having freely rotating wheels onto which the carrier plate is to be arranged instead of the carrier plate being arranged directly onto rigidly secured details of the first and second parts the carrier plate is not following a sideways movement (i.e. in x- and/or y- direction) of the lifting arrangement as the linkage system is raised or lowered. At any case, the carrier plate does not have to frictionally glide on such rigidly secured details to keep its x-y position when being raised or lowered but instead the freely rotating wheels rolls to keep the carrier plate in place.

According to another embodiment, the freely rotating wheels are positioned so that they have their respective axis of rotation at its respective turning shaft.

According to the invention, the first part of the first linkage system defines a first opening that encloses the first eccentric, and the first part of the second linkage system defines a second opening that encloses the second eccentric. Further, the periphery of the first eccentric bears against a periphery of the first part of the first linkage system defining the first opening, and the periphery of the second eccentric bears against a periphery of the first part of the second linkage system defining the second opening. As the respective first and second eccentric each is enclosed by a respective opening in the respective first part of the first and second linkage system, the movement of the eccentric in relation to the linkage system is controlled. In other words, there is no risk of the first eccentric slipping off the first part of the first linkage system and no risk of the second eccentric slipping off the first part of the second linkage system. According to an embodiment, the periphery of the first eccentric bears against the periphery of the first part of the first linkage system defining the first opening at at least two separate positions, and the periphery of the second eccentric bears against the periphery of the first part of the second linkage system defining the second opening at at least two separate positions. The two separate positions may be on diametrically opposed positions of the periphery of its respective first and second eccentric.

According to another embodiment, the first and second eccentric each comprises an inner part and an outer part situated radially outwards of the inner part, the inner and outer parts being separated by a bearing. Hereby the outer part of the eccentric does not rotate as the inner part is rotated when the eccentric is rotated by the lifting drive shaft. As a result, there is no sliding between the respective eccentric and the first part of the respective first and second linkage system as the eccentrics are rotated.

According to another embodiment, the lifting driving arrangement comprises a lifting motor having a lifting motor shaft and a transmission connecting the lifting motor shaft with the lifting drive shaft. By having separate lifting motor shaft and lifting drive shaft, connected via a transmission, the exchange between motor shaft and lifting drive shaft can be selected depending on which motor strength you have. For example, if you would like to have a weaker motor, the exchange is selected accordingly, having e.g. larger wheels on the lifting drive shaft than on the motor shaft, the wheels being connected by e.g. a driving belt. In other words, the transmission may be a driving belt.

According to another aspect, a transport cart of a storage and retrieval system is provided. The transport cart comprises a chassis onto which a lifting arrangement according to any of the embodiments of the aspect above is arranged, and a carrier plate for carrying goods to be transported on the transport cart. The carrier plate is arranged onto the first and second parts of the first and second linkage system of the lifting arrangement.

According to an embodiment, the carrier plate is arranged onto the freely rotating wheels of the first and second parts of the first and second linkage system described in some of the embodiments above.

According to an embodiment, the carrier plate has a horizontal part for receiving goods and a first and a second vertical part that extend substantially perpendicular to the horizontal part, the first and second vertical parts being arranged at opposite ends of the horizontal part. Further, the transport cart comprises a first guiding device arranged to the first vertical part of the carrier plate and a second guiding device arranged to the second vertical part of the carrier plate, the first and second guiding devices being arranged to the first and second vertical part so that they face each other. Further, the chassis has a first vertical side and a second vertical side, which sides extend substantially parallel to the first and second vertical parts of the carrier plate. Each of the first and second vertical sides have guiding plates extending from its respective first or second vertical side towards its respective first or second vertical part of the carrier plate. The guiding plates are positioned on their respective first or second vertical side so that they are on opposite sides of the respective guiding device. By such guiding plates on the chassis being positioned on opposite sides of each guiding device of the carrier plate, the carrier plate is prevented from movement sideways in relation to the chassis as the carrier plate is moved upwards from the chassis due to the rotation of the lifting drive shaft rotating the eccentrics.

According to a variant of this embodiment, the carrier plate has a horizontal part for receiving goods and a first and a second vertical part that extend substantially perpendicular to the horizontal part, the first and second vertical parts being arranged at opposite ends of the horizontal part. Further, the chassis has a first vertical side and a second vertical side, which sides extend substantially parallel to the first and second vertical parts of the carrier plate. Further, a first guiding device is arranged to the first vertical side and a second guiding device is arranged to the second vertical side, the first and second guiding devices being arranged to the first and second vertical sides so that they face away from each other. The transport cart further comprises guiding plates arranged to the first vertical part of the carrier plate and to the second vertical part of the carrier plate. The guiding plates extend from the first or second vertical part towards the respective first or second vertical side of the chassis. The guiding plates are positioned on their respective first or second vertical part so that they are on opposite sides of the respective guiding device. This variant describes an embodiment wherein the guiding plates are positioned on the carrier plate and the guiding devices are positioned on the chassis instead of the other way around as in the embodiment described immediately above.

According to an embodiment, the first guiding device is a guiding wheel that is rotationally arranged to the first vertical part of the carrier plate or to the first vertical side of the chassis, and the second guiding device is a guiding wheel that is rotationally arranged to the second vertical part of the carrier plate or to the second vertical side of the chassis.

Further possible features and benefits of this solution will become apparent from the detailed description below.

### Brief description of drawings

The invention is now described, by way of example, with reference to the accompanying drawings, in which:
Fig. 1 is a perspective view of a storage and retrieval system in which the present invention may be used.
Fig. 2 is a perspective view of a part of a storage and retrieval system in which the present invention may be used.
Fig. 3a is a perspective view of a transport cart in a first position, according to an embodiment of the invention.
Fig. 3b is a perspective view of a transport cart in a second raised position, according to an embodiment.
Fig. 3c is a perspective view of the inside of the transport cart when a carrier plate has been taken away.
Fig. 4a is side view of a linkage system of a lifting arrangement in a first position, according to an embodiment.
Fig. 4b is a side view of the linkage system of the lifting arrangement when in a second, raised position.
Fig. 4c is a side view showing the linkage system of the lifting arrangement in both the first and the second position.
Fig. 5 is a perspective view of the lifting arrangement according to an embodiment.
Fig. 6 is a perspective view of another embodiment of the lifting arrangement.
Fig. 7 is a side view of a part of a linkage system according to an embodiment.
Fig. 8 is a perspective view of an eccentric according to an embodiment.
Figs. 9-10 are perspective views of a carrier plate of a transport cart according to an embodiment.

### Description of embodiments

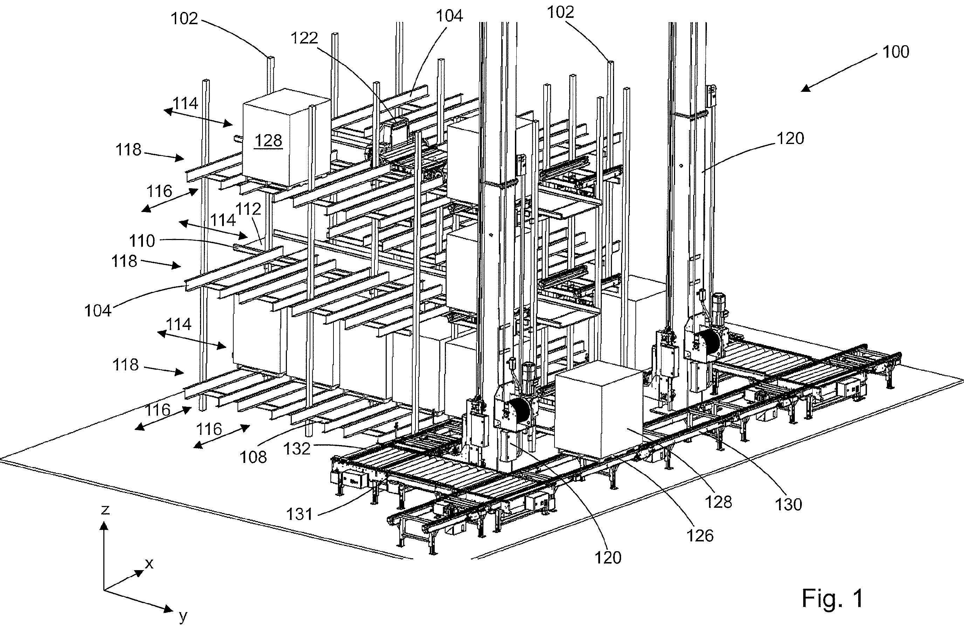

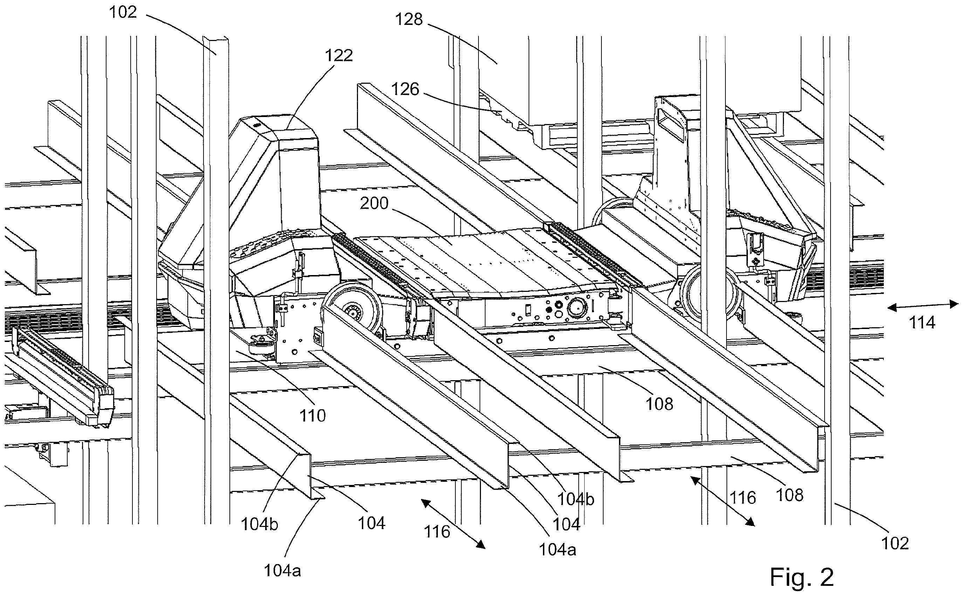

Figs. 1 and 2 show an embodiment of a storage and retrieval system 100 in which the present invention may be used. Fig. 1 shows an overview of the storage and retrieval system 100, whereas fig. 2 shows a close-up view of a part of the storage and retrieval system 100 of fig. 1. The invention may be used in similar storage and retrieval systems as the one of fig. 1 and 2 as well.

The storage and retrieval system of fig. 1 is three-dimensional and described in a Cartesian coordinate system, wherein the x-axis and y-axis are mutually perpendicular directions in the horizontal plane and the z-axis extends vertically, perpendicular to both the x- and y-axis. The storage and retrieval system defines a plurality of horizontal transport rows 116 running in the x-direction and a plurality of horizontal transport aisles 114 running in the y-direction so that different storage positions of the system can be reached via the transport rows and aisles 114, 116. The storage and retrieval system defines a plurality of floors 118, each floor comprising such transport rows and aisles 114, 116. The storage and retrieval system further comprises one or more elevators assemblies 120 for transporting goods between the floors, (in fig. 1 there are two elevator assemblies 120). The plurality of transport aisles 114 each comprises aisle rails 110 onto which aisle carts 122 are arranged to be transported. The plurality of transport rows 116 each comprises row cart rails 104 onto which row carts 200 (see fig. 2) are to be transported. Fig. 2 shows an example of a row cart rail 104 that has a first flange 104a at its lower end pointing in a first direction and a second flange 104b at its upper end pointing in a second direction opposite the first direction. In other words, the row cart rail has a z-profile. Each transport row 116 has a row cart rail pair comprising a first row cart rail and a second row cart rail, the first and second row cart rails being arranged so that their first flanges 104a point towards each other and their second flanges 104b point away from each other. The row cart rails are to be transported onto the first flanges 104a. Pallets 128 of goods are to be stored onto the second flanges 104b.

The row cart 200 is arranged for transporting loads along the transport rows 116 and the aisle cart 122 is arranged for transporting the row cart 200 as well as loads arranged on the row cart along the transport aisles 114. As goods 128 is received, e.g. on a pallet 126, to the storage and retrieval system 100, the pallet 126 with goods 128 is designated a storage position in the storage and retrieval system 100 by a control system that controls the process of moving and positioning of goods into and out of the storage and retrieval system 100. The pallet 126 is then transported to the elevator assembly 120 on incoming conveyors 130, 131, 132. In the embodiment of fig. 1, there are three incoming conveyors, a first conveyor 130 perpendicularly arranged to a second conveyor 131, which is in its turn is perpendicularly arranged to a third conveyor 132, which leads to a first of the elevator assemblies 120. The conveyors may be e.g. chain conveyor or roller conveyors. The pallet is transported from the first conveyor 130 via the second conveyor 131 to the third conveyor 132, and from the third conveyor 132 to the elevator assembly 120. The part of the incoming conveyors line where conveyors cross each other, i.e. where the first conveyor 130 and the second conveyor 131 cross each other as well as where the second conveyor 131 and the third conveyor 132 cross each other is called a Driven Transfer Unit, DTU. The DTU may comprise a lifting arrangement for seeing to that the pallet is changed from being driven by the first conveyor to the second conveyor or from the second conveyor to the third conveyor, for example by temporarily lifting a part of the first conveyor, when the pallet has been received at the DTU at the crossing of the first and second conveyor. After the pallet has approached the elevator assembly 120, the pallet may be lifted from the third conveyor 132 onto the elevator assembly 120.

The elevator assembly 120 is then driven to the correct floor 118 according to the designated storage position. Thereafter, the pallet is transported out of the elevator assembly 120 onto an intermediate transport conveyor. There may be for example a fork lift or a chain conveyor in the elevator assembly that transports the pallet out of the elevator assembly and onto the intermediate transport conveyor. A row cart 200 positioned on the correct floor may then collect the pallet at the intermediate transport conveyor where after the row cart is driven onto the aisle cart. Alternatively, the pallet may be transported from the intermediate transport conveyor to the row cart positioned onto the aisle cart by e.g. a chain conveyor. In some embodiment, there may be lifting arrangement in the elevator assemblies 120. Alternatively, the pallet is lifted onto the row cart 200 already at ground level and the row cart is transported to the correct floor by the elevator 120. The row cart 200 comprising the pallet 126 is then driven onto an aisle cart 122 positioned on the same floor.

The aisle cart 122 then transports the row cart 200 including the pallet 126 along one of the transport aisles 114 until it reaches a correct transport row 116 that fits with the designated position at which the pallet is to be stored. When the correct transport row 116 is reached, the row cart 200 is driven out of the aisle cart 122 along the correct transport row 116, on the row cart rails 104 of the correct transport row, until the designated position is reached. Here the row cart 200 lifts the pallet and leaves it on the second flanges 104b of the pair of row cart rails 104 of the correct transport row 116. Thereafter, the row cart 200 drives back to the aisle cart 122 for further transportation to e.g. the elevator 120.

In fig. 2, the row cart 200 has been driven onto the aisle cart 122 for further transportation along a transport aisle 114. Further, the row cart rails 104 of a transport row 116 is shown in more detail. Figs. 1 and 2 further show vertical columns 102, extending in the z-direction, as well as row spacing members 108 interconnecting the vertical columns 102 in the y-direction. Fig. 1 further shows aisle gratings 112 extending between pairs of aisle rails 110 of one transport aisle 114.

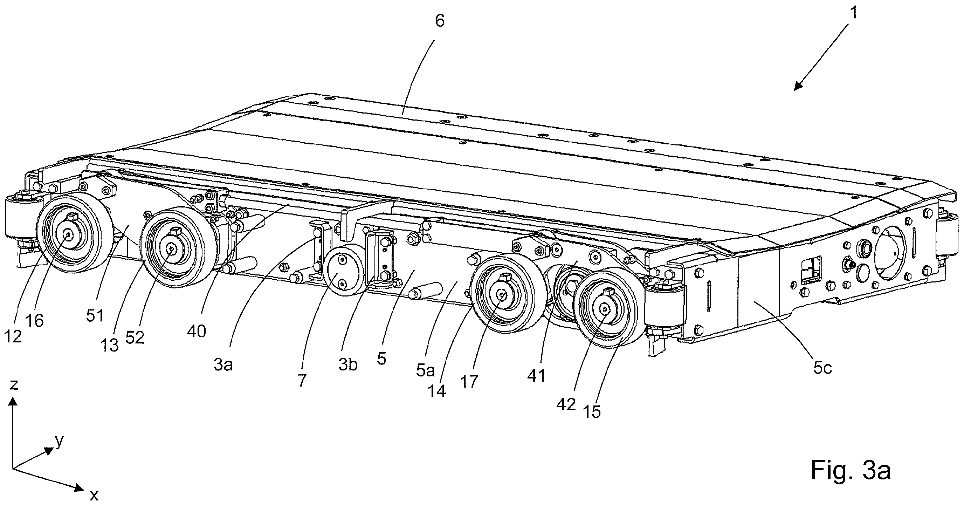

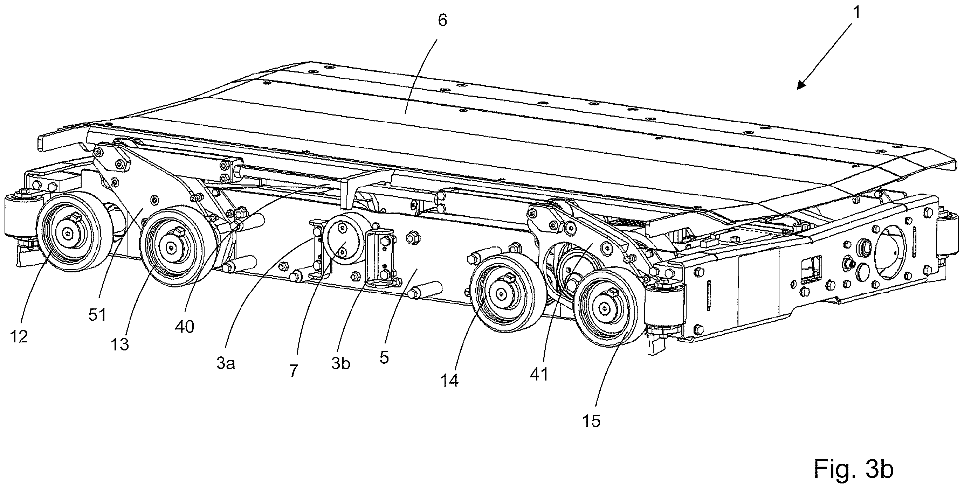

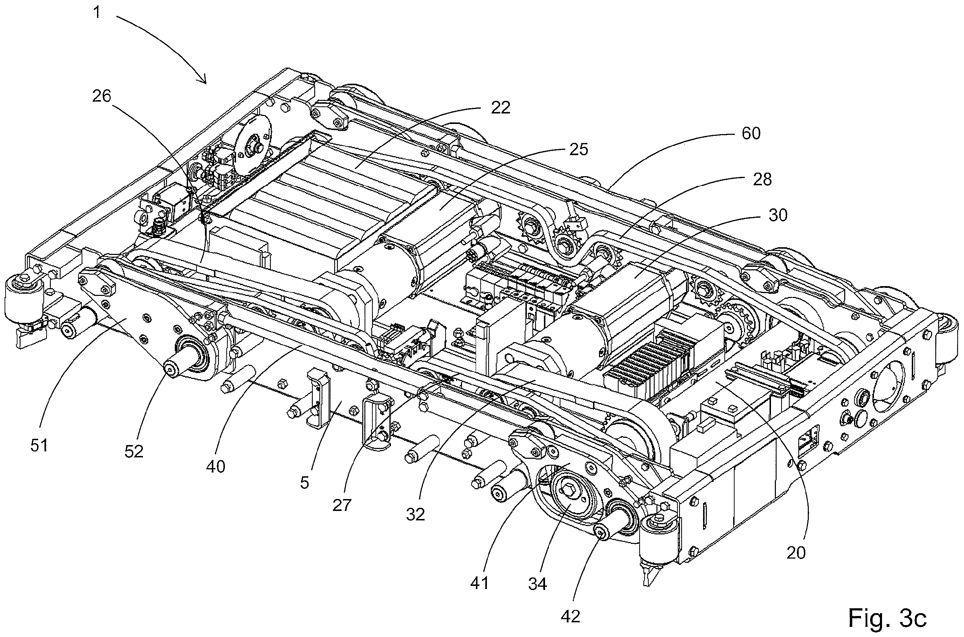

Figs. 3a-3c describes a transport cart 1 according to a preferred embodiment of the invention. The transport cart may be used as a row cart 200 of figs. 1-2, alternatively, the transport cart, or parts of it, may be used as or in an aisle cart 122, or as or in a cart of an elevator. The transport cart 1 comprises a chassis 5 having a substantially horizontal lower side and four substantially vertical sides extending upwards from the horizontal lower side. The four vertical sides consists of a first side 5a and a second side, the first and second side being substantially parallel, and a third side 5c and a fourth side that are substantially parallel. The first and the second sides may be long sides of the chassis and the third and fourth side may be short sides. The third 5c and fourth side are perpendicular to the first 5a and second side. The terms "horizontal" and "vertical" are used with respect to a normal usage of the cart, when the cart is arranged on a horizontal ground. In fig. 3a there is a Cartesian co-ordinate system arranged, in which the z-axis is in the vertical direction, the x-axis in the horizontal direction along the long sides and the y-axis in the horizontal direction along the short sides of the chassis. At the first side 5a of the chassis 5, there is a first linkage system 40 arranged. At the second side of the chassis 5, there is a second linkage system 60 arranged, which is not seen in figs. 3a and 3b but which could be seen in fig. 3c. The transport cart 1 further comprises a carrier plate 6 for receiving and carrying goods to be transported on the transport cart 1. The goods may for example be arranged in a pallet that is to be positioned on the carrier plate 6. The carrier plate 6 is arranged onto the first and the second linkage system 40, 60. The first and second linkage system 40, 60 are used in a lifting arrangement for lifting the carrier plate 6 according to embodiments of the invention.

Fig. 3c shows the transport cart 1 with the carrier plate 6 lifted away, thereby revealing the inside of the transport cart. The transport cart 1 comprises a transporting arrangement for transporting the cart forward and backwards. The transporting arrangement comprises a transport motor 25, a transport motor shaft, a transport driving belt 26, subsequent transport driving belts 27, 28, rotating shafts 16, 52, 17, 42 and drive wheels 12, 13, 14, 15 (see fig. 3a). The transport motor 25 creates a rotating motion onto the transport motor shaft that drives a transport driving belt 26, which via the rotating shafts 16, 52, 17, 42 and the subsequent transport driving belts 27, 28 drives the wheels 12, 13, 14, 15 (see fig. 3a) to rotate in order to move the transport cart backwards and forwards.

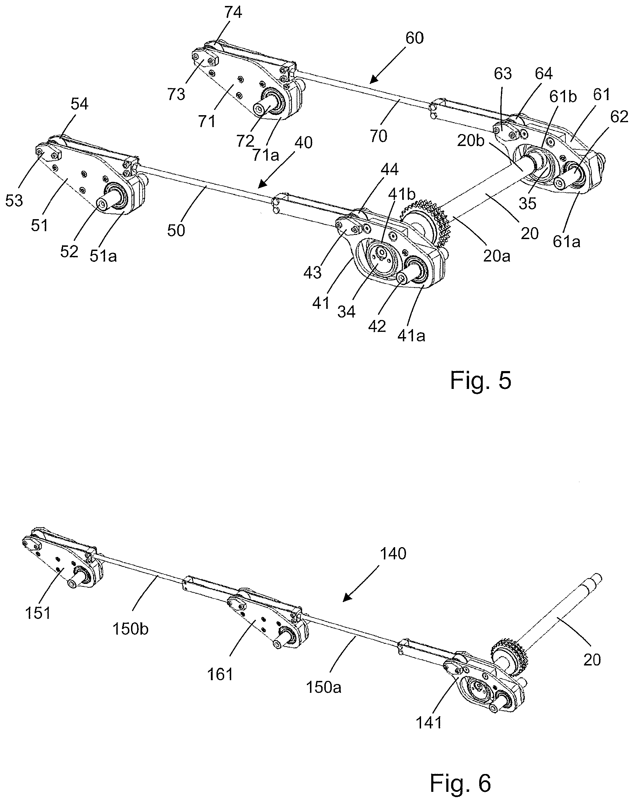

The transport cart 1 further comprises a lifting arrangement for lifting the carrier plate 6, see fig. 3c and fig. 5 for example. The lifting arrangement comprises a lifting motor 30, a lifting motor shaft, a lifting driving belt 32 and a lifting drive shaft 20. The lifting motor 30 as well as the transport motor 25 are powered by a power source 22. The power source 22 may be a battery or a capacitor pack. The power source may be charged by connecting it to an external power source via power connectors (not shown) that may be arranged on the underside of the transport cart 1. The lifting driving belt 32 is arranged to the lifting motor shaft and the lifting drive shaft 20. The lifting motor 30 creates a rotating motion onto the lifting motor shaft, which lifting motor shaft drives the lifting driving belt 32 to rotate. The rotation of the lifting driving belt 32 in its turn drives the lifting drive shaft 20 to rotate. In an alternative embodiment, the lifting motor 30 may be arranged directly on the lifting drive shaft 20. In this case no lifting drive belt 32 is needed as the lifting motor shaft and lifting drive shaft 20 will be the same shaft. However, the torque needed from the motor will increase.

The lifting drive shaft 20 has a first end 20a and a distal second end 20b (fig. 5). Onto the first end 20a of the lifting drive shaft 20 there is a first eccentric 34 fixedly arranged, and onto the second end 20b of the lifting drive shaft 20 there is a second eccentric 35 fixedly arranged. The first eccentric 34 is connected to the first linkage system 40 and the second eccentric 35 is connected to the second linkage system 60.

The first linkage system 40 has a first part 41 and a second part 51 distant to the first part, the second part 51 being connected to the first part 41 via a first link arm 50, which may be a rigid link arm. The first part 41 and the second part 51 of the first linkage system 40 each has a first end-part 41a, 51a arranged to a link-turning shaft 42, 52 arranged to the first side 5a of the chassis 5 of the transport cart in such a way that the first and second parts 41, 51 are rotatable around an axis defined by its respective link-turning shaft 42, 52. In a similar manner, the second linkage system 60 has a first part 61 and a second part 71 distant to the first part, the second part 71 being connected to the first part 51 via a second link arm 70, which may be a rigid link arm. The first part 61 and the second part 71 of the second linkage system 60 each has a first end-part 61a, 71a arranged to a link-turning shaft 62, 72 arranged to the second side of the chassis 5 of the transport cart in such a way that the first and second parts 61, 71 are rotatable around an axis defined by its respective link-turning shaft 62, 72. The link-turning shafts 42, 52, 62, 72 are arranged in a hole of the first end-parts 41a, 51a, 61a, 71a. According to the described embodiment, the link-turning shafts 42, 52, 62, 72 are the same shafts as the rotating shafts 42, 52 to which the wheels 13, 15 are connected. In this embodiment, the first and second parts 41, 51, 61, 71 are connected to the rotating shafts via a respective bearing so that the rotating shafts can rotate the wheels without at the same time rotating the first and second parts 41, 51, 61, 71 of the first and second linkage systems 40, 60. By such an arrangement the number of shafts can be minimized. According to another alternative, separate shafts are used for rotating the wheels 12, 13, 14, 15, as are used for the turning of the linkage system parts 41, 51, 61, 71.

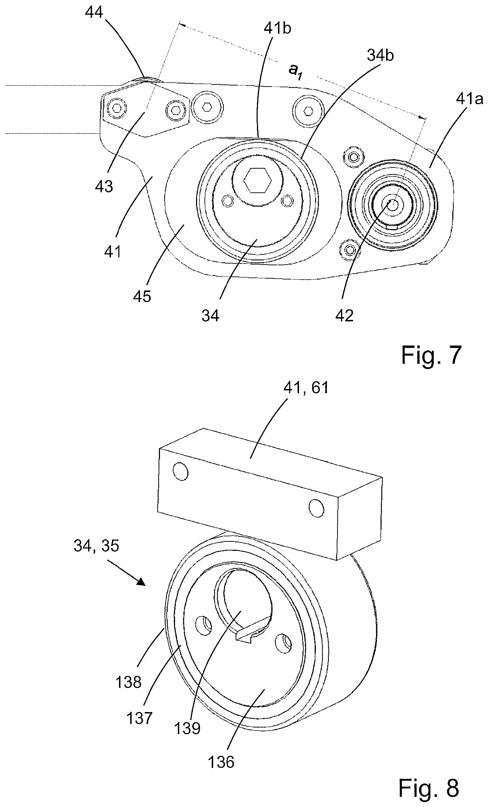

Further, a periphery 34b (see fig. 7) of the first eccentric 34 bears against the first part 41 of the first linkage system 40 and a periphery of the second eccentric 35 bears against the first part 61 of the second linkage system 60 so that when the lifting drive shaft 20 rotates the first and the second eccentric 34, 35, the periphery of the first eccentric 34 urges a reciprocating movement onto the first linkage system 40 and a periphery of the second eccentric 35 urges a reciprocating movement onto the second linkage systems 60 so that the respective first and second parts 41, 61, 51, 71 of the first and second linkage system 40, 60 turn back and forth around their respective link-turning shaft 42, 62, 52, 72.

Further, the first eccentric 34 bears against a position 41b of the first part 41 of the first linkage system 40 that is displaced from the first end-part 41a of the first part 41 of the first linkage system 40. The second eccentric 35 bears against a position 61b of the first part 61 of the second linkage system 60 that is displaced from the first end-part 61a of the first part 61 of the second linkage system 60.

Accordingly, as the first and second eccentrics 34, 35 have their respective rotation axis displaced from the their respective centers, as the first and second parts 41, 51, 61, 71 of the respective first and second linkage system 40, 60 are rotationally arranged to the chassis and as the first and second eccentric 34, 35 bears against the first parts 41, 61 of the respective first and second linkage system 40, 60 at a position 41b, 61b of the first parts 41, 61 displaced from the first end-parts 41a, 61a where the first parts 41, 61 are rotatably arranged to the chassis, the rotational movement of the first and second eccentrics 34, 35 results in a reciprocating up and down movement of the respective first part 41, 61 of the first and second linkage system 40, 60, around their axes of rotation. As the first and second eccentric 34, 35 rotates one lap, the first and second linkage system 40, 60 moves in a reciprocating movement from a starting position to a highest position and further to a lowest position and back to the starting position again. As the respective first part 41, 61 is further connected to the respective second part 51, 71 via the respective first and second link arm 50, 70, and the respective second parts 51, 71 are rotationally arranged to the chassis 5, the reciprocating movement of the first parts 41, 61 of the first and second linkage system 40, 60 will be transmitted into a similar reciprocating movement of the second parts 51, 71 of the first and second linkage systems 40, 60.

Further, according to an embodiment, the first parts 41, 61 and the second parts 51, 71 of the first and second linkage system 40, 60 each has a turning shaft 43, 63, 53, 73 displaced from its respective link-turning shaft 42, 62, 52, 72. The turning shafts 43, 53, 63, 73 are according to the shown embodiment positioned at a second end-part of the respective first and second part 41, 51, 61, 71 of the first and second linkage system 40, 60. Each of the second end-parts is distal to its respective first end-part 41a, 51a, 61a, 71a. Further, as a possible alternative, the turnings shafts 43, 63 of the first parts 41, 61 of the first and second linkage system 40, 60 are realized by a first end of the respective first and second link arm 50, 70 being rotatably connected to the first part 41, 61 of the respective first and second linkage system 40, 60. Similarly, the turnings shafts 53, 73 of the second parts 51, 71 of the first and second linkage system 40, 60 are realized by a second end of the respective first and second link arm 50, 70 being rotatably connected to the second part 51, 71 of the respective first and second linkage system 40, 60.

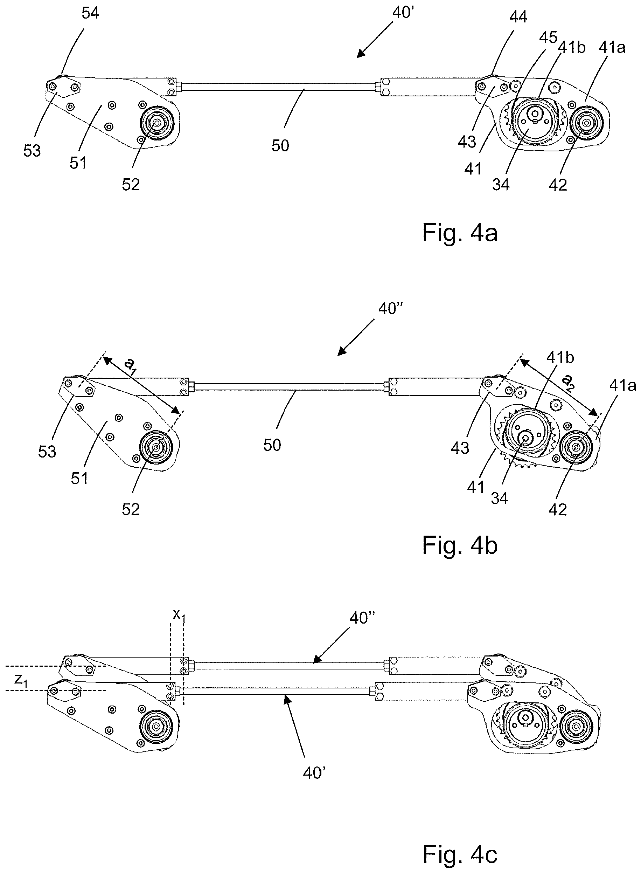

According to an embodiment, a distance a₁ (see fig. 4b and 7) between the turning shaft 43, 63 of the first part 41, 61 and the link-turning shaft 42, 62 of the first part 41, 61 of the respective first and second linkage system 40, 60 is approximately the same as a distance a₂ between the turning shaft 53, 73 of the second part 51, 71 and the link-turning shaft 52, 72 of the second part 51, 71 of the respective first and second linkage system 40, 60.

According to another embodiment, the position 41b of the first part 41 of the first linkage system 40 where the first eccentric 34 bears against the first part 41 is situated between the first end-part 41a and the second end part where the turning shaft 43 is situated. Further, the position 61b of the first part 61 of the second linkage system 60 where the second eccentric 35 bears against the first part 61 is situated between the first end-part 61a and the second end part where the turning shaft 63 is situated. More specifically, the respective positions 41b, 61b may be situated approximately half way between the respective first end-parts 41a, 61a where the link-turning shaft 42, 62 is situated and the respective turning shaft 43, 63.

Further, according to the invention, the first part 41 of the first linkage system 40 defines a first opening 45 that encloses the first eccentric 34, and the first part 61 of the second linkage system 60 defines a second opening that encloses the second eccentric 35. Further, the periphery 34a of the first eccentric 34 bears against a periphery of the first part 41 of the first linkage system 40 defining the first opening 45, and the periphery of the second eccentric 35 bears against a periphery of the first part 61 of the second linkage system 60 defining the second opening. In other words, the first eccentric 34 is arranged inside the first opening 45 of the first part 41 of the first linkage system 40. The first opening 45 may be a through-hole. The first eccentric 34 may have such a size compared to the size of the first opening 45 that the first eccentric 34 bears against two diametrically opposed parts of the first opening 45, at two diametrically opposed parts of the first eccentric 34. Similarly, the second eccentric 35 is arranged inside the second opening of the first part 61 of the second linkage system 60. The second opening may be a through-hole. The second eccentric 35 may have such a size compared to the size of the second opening that the second eccentric 35 bears against two diametrically opposed parts of the second opening, at two diametrically opposed parts of the second eccentric 35.

Fig. 4a shows the first linkage system 40 when the first eccentric 34 is positioned so that the first linkage system takes on a lowest position 40', whereas fig. 4b shows the first linkage system 40 when the first eccentric 34 is positioned so that the first linkage system 40 takes on a highest position 40". In fig. 4c, the lowest position 40' is compared to the highest position 40" by in fig. 4c arranging the first linkage system in its two end positions on top of each other. As can be seen, the first linkage system 40 has moved a distance z₁ along the vertical z-axis from the lowest position 40' to the highest position 40", in order to lift the carrier plate positioned onto it. However, the first linkage system 40 has at the same time also moved a distance x₁ along the horizontal x-axis. In some embodiments it is not desirable for a carrier plate 6 positioned on top of the first and second linkage system 40, 60 to move horizontally, for which reason the transport cart may be equipped with a guiding arrangement, as will be described further below, the guiding arrangement securing that the carrier plate 6 only moves vertically as the first and second linkage systems 40, 60 moves from the lowest positon to the highest position or vice versa. In order for the carrier plate 6 not to slide on top of the first and second linkage system 40, 60 when the first and second linkage systems 40, 60 are moved from lowest positon 40' to highest position 40" and the carrier plate is to keep its horizontal position, the first and the second parts 41, 61, 51, 71 of the respective first and second linkage system 40, 60 each has freely rotating wheels 44, 64, 54, 74 (see fig. 4a, 5 and 7) arranged for receiving the carrier plate 6. The carrier plate can then roll on the wheels 44, 54, 64, 74 as the carrier plate 6 is guided to keep its horizontal position. According to the shown embodiment, the freely rotating wheels 44, 54, 64, 74 are positioned so that they have their respective axis of rotation at its respective turning shaft 43, 53, 63, 73.

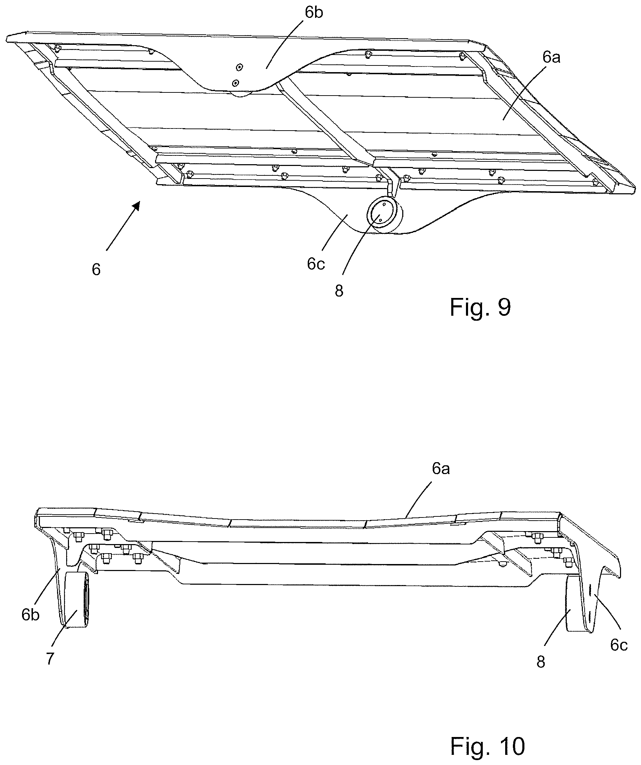

In the following, an embodiment is described of such a guiding arrangement for securing that the carrier plate 6 only moves vertically as the first and second linkage systems 40, 60 move from the lowest positon to the highest position. Figs. 9 and 10 show an embodiment of the carrier plate 6 for receiving goods or pallets with goods. The carrier plate 6 has a horizontal part 6a for receiving goods and a first and a second vertical part 6b, 6c that extend substantially perpendicular to the horizontal part 6a, the first and second vertical parts being arranged at opposite ends of the horizontal part 6a. Onto the first vertical part 6b of the carrier plate 6, there is a first guiding device 7 arranged and onto the second vertical part 6c there is a second guiding device 8 arranged. The first guiding device 7 is arranged on the first vertical part 6b and the second guiding device 8 is arranged on the second vertical part 6c. The first and second guiding devices 7, 8 are arranged on their respective first and second vertical part 6b, 6c so that they face each other. The guiding device 7 is also seen in fig. 3a. In this figure the first vertical part 6b of the carrier plate 6 has been taken away so as to reveal the guiding device 7. As the guiding device 7 is situated on the inside of the first vertical part 6b, i.e. the side facing the chassis, it would otherwise not be seen in fig. 1. Further, the first vertical side 5a and the second vertical side of the chassis each has guiding plates 3a, 3b (see fig. 3a) extending from its surface towards its respective first and second vertical part 6b, 6c of the carrier plate 6. The guiding plates 3a, 3b are positioned on their respective first and second vertical side 5a so that they are on opposite sides of the respective guiding device 7, 8. The guiding plates 3a, 3b are arranged so that they bear against, or at least almost bear against opposite sides of the guiding device 7, 8 of the respective first vertical side 5a and second vertical side so that in case the carrier plate 6 tries to move horizontally, the guiding devices 7, 8 stop this horizontal movement as the guiding devices are stopped from horizontal movement by the guiding plates 3a, 3b.

According to an embodiment, the first and second guiding devices 7, 8 may be guiding wheels that are rotationally arranged to their respective first and second vertical part 6b, 6c of the carrier plate 6. Hereby, the guiding wheels will roll along the guiding plates 3a, 3b as the carrier plate 6 is moved vertically up and down. Hence, there is no or at least very low friction force between the guiding wheels 7, 8 and the guiding plates 3a, 3b. Fig. 3a shows the transport cart with its carrier plate, and consequently, the first and second linkage systems 40, 60 in their lowest position, whereas fig. 3b shows the transport cart with the carrier plate 6, and the first and second linkage systems 40, 60 in their highest position. As seen, the guiding wheel 7 has a lower position between the guiding plates 3a, 3b in fig. 3a, as it has in fig. 3b. According to another embodiment, the guiding devices 7, 8 may be a sliding block of for example rounded shape that is to slide between the guiding plates. According to yet another embodiment, the guiding devices 7, 8 may be arranged on the first vertical side 5a and the second vertical side of the chassis 5 and the guiding plates 3a, 3b may be arranged on the first and second vertical parts 6b, 6c of the carrier plate 6, i.e. the other way around compared to how they are arranged in the embodiment shown in the figures.

Fig. 6 shows an alternative embodiment of a linkage system 140, the linkage system comprising, except for a first part 141 and a second part 151, also a third part 161 that is arranged between the first and the second part 141, 151. The third part 161 is connected with its first end to the first part 141 via a first link arm 150a, which may be rigid, and the third part 161 is connected with its second end to the second part 151 via a second link arm 150b, which may be rigid, in a similar manner as for the linkage systems of figs. 4a-4c and 5. The third part 161 comprises similar portions as the first and second parts 41, 61 described in figs. 4a-4c and 5. By such an arrangement, more lifting points can be easily incorporated into the linkage design when needed.

Fig. 7 shows a close-up view of the first part 41 of the first linkage system 40, however it could also have been the first part 61 of the second linkage system 60. In the figure, the distance a₁ between the turning shaft 43 and the link-turning shaft 42 of the first part 41 of the first linkage system 40 is marked. The distance a₁, and consequently the corresponding distance a₂ between the turning shaft 53 and the link-turning shaft 52 of the second part 51, can be increased to increase lifting height of the lifting arrangement. In a similar manner, the distances a₁ and a₂ can be decreased to decrease lifting height of the lifting arrangement.

Fig. 8 describes an embodiment of a first and second eccentric 34, 35. In this embodiment, the eccentric 34, 35 comprises an inner part 136 and an outer part 138 situated radially outwards of the inner part 136, the inner and outer parts 136, 138 being separated by a bearing 137. The bearing 137 may be a roller bearing. However, other types of bearings such as ball bearings or sliding bearing can be used as well. By using such a bearing solution, the outer part 138 can keep its position onto its respective first or second part 41, 51, 61, 71 of the first or second linkage system 40, 60 when the inner part 136 is rotated, as the outer part 138 does not follow the rotation of the inner part 136. The eccentric 34, 35 further comprising a through hole 139 in which the lifting drive shaft 20 is securely arranged. As could be seen, the through hole 139 is displaced from the center of the eccentric, in order to make it an eccentric. Fig. 8 further shows a portion of the first part 41, 61 of the first or second linkage system 40, 60 onto which the periphery of the eccentric 34, 35 bears against, the portion being isolated from surrounding portions of the first part 41, 61. The shown portion may have a surface that is of a hard material that is extra resistant to wearing.

The storage and retrieval system shown in fig. 1 is three-dimensional. However the invention is also applicable in a two-dimensional storage and retrieval systems.

The lifting arrangement and the transport cart described in the embodiments above is especially useful as a row cart of a storage and retrieval system such as the system described in fig. 1 and 2. However, the lifting arrangement and the transport cart may be used in any part of a storage and retrieval system, such as in an elevator assembly or in an aisle cart. Other possible areas of a storage and retrieval system in which the lifting arrangement and/or the transport cart may be used is for lifting of an incoming conveyor, or for any lifting of a pallet at any part of the storage and retrieval system, or for tilting a conveyor, or for lifting a DTU.

The wording "transport cart" should be interpreted broadly as any kind of arrangement that can be used in a storage and retrieval system for lifting and/or transporting goods.

## Claims

1. A lifting arrangement (10) of a transport cart (1) of a storage and retrieval system, the lifting arrangement comprising:
a lifting drive shaft (20) having a first end (20a) and a second end (20b);
a lifting driving arrangement (30, 32) connected to the lifting drive shaft (20), for rotating the lifting drive shaft;
a first and a second eccentric (34, 35), the first eccentric (34) being fixed to the first end (20a) of the lifting drive shaft (20) and the second eccentric (35) being fixed to the second end (20b) of the lifting drive shaft;
a first and a second linkage system (40, 60), each having a first part (41, 61) and a second part (51, 71) distant to its respective first part, the second part (51) of the first linkage system (40) being connected to the first part (41) of the first linkage system (40) via a first link arm (50), and the second part (71) of the second linkage system (60) being connected to the first part (61) of the second linkage system (60) via a second link arm (70), the first and the second parts (41, 61, 51, 71) each being rotatably mountable to a chassis (5) of the transport cart (1), whereby a periphery (34b) of the first eccentric (34) bears against the first part (41) of the first linkage system (40) and a periphery (35b) of the second eccentric (35) bears against the first part (61) of the second linkage system (60) so that when the lifting drive shaft (20) rotates the first and the second eccentric (34, 35), the periphery of the first eccentric (34) urges a reciprocating movement onto the first linkage system (40) and the periphery of the second eccentric (35) urges a reciprocating movement onto the second linkage systems (60) so that the respective first and second parts (41, 61, 51, 71) turn back and forth around an axis oriented substantially parallel to an axis of the lifting drive shaft (20), **characterized by that** the first part (41) of the first linkage system (40) defines a first opening (45) that encloses the first eccentric (34), and the first part (61) of the second linkage system (60) defines a second opening (65) that encloses the second eccentric (35), and whereby the periphery (34a) of the first eccentric (34) bears against a periphery of the first part (41) of the first linkage system defining the first opening (45), and the periphery (35a) of the second eccentric (35) bears against a periphery of the first part (61) of the second linkage system defining the second opening (65).

2. Lifting arrangement according to claim 1, wherein the first and the second parts (41, 61, 51, 71) of the first and the second linkage system (40, 60) are arranged to a respective link-turning shaft (42, 62, 52, 72) at a first end-part (41 a, 61 a, 51 a, 71 a) of the respective first and second parts of the first and second linkage system (40, 60), which first end-part (41a) of the first part (41) of the first linkage system (40) is spaced apart from a position (41b) of the first part (41) where the periphery (34b) of the first eccentric (34) bears against the first part (41) of the first linkage system (40), and which first end-part (61a) of the first part (61) of the second linkage system (60) is spaced apart from a position (61b) of the first part (61) of the second linkage system (60) where the periphery (35b) of the second eccentric (35) bears against the first part (61) of the second linkage system (60).

3. Lifting arrangement according to claim 2, wherein the first parts (41, 61) and the second parts (51, 71) of the first and second linkage system (40, 60) each has a turning shaft (43, 63, 53, 73) displaced from its respective first end-part (41a, 61a, 51a, 71a), wherein the respective first and second link arm (50, 70) connects the turning shaft (43, 63) of the first part (41, 61) with the turning shaft (53, 73) of the second part (51, 71).

4. Lifting arrangement according to claim 3, wherein a distance between the turning shaft (43, 63) of the first part (41, 61) and the first end-part (41a, 61a) of the first part (41, 61) of the respective first and second linkage system (40, 60) is approximately the same as a distance between the turning shaft (53, 73) of the second part (51, 71) and the first end-part (51a, 71a) of the second part (51, 71) of the respective first and second linkage system (40, 60).

5. Lifting arrangement according to claim 3 or 4, wherein the position (41b) of the first part (41) of the first linkage system (40) where the periphery (34b) of the first eccentric (34) bears against the first part (41) of the first linkage system (40) lies between the first end-part (41a) and the turning shaft (43) of the first part (41) of the first linkage system (40), and wherein the position (61b) of the first part (61) of the second linkage system (60) where the periphery (35b) of the second eccentric (35) bears against the first part (61) of the second linkage system (60) lies between the first end-part (61a) and the turning shaft (63) of the first part (61) of the second linkage system (60).

6. Lifting arrangement according to any of the preceding claims, wherein the first and the second parts (41, 61, 51, 71) of the respective first and second linkage system (40, 60) each has freely rotating wheels (44, 64, 54, 74) arranged for receiving a carrier plate for carrying goods to be transported on the transport cart (1).

7. Lifting arrangement according to any of claims 3-5 and according to claim 6, wherein the freely rotating wheels (44, 54, 64, 74) are positioned so that they have their respective axis of rotation at its respective turning shaft (43, 53, 63, 73).

8. Lifting arrangement according to any of the preceding claims, wherein the first and second eccentric (34, 35) each comprises an inner part (136) and an outer part (138) situated radially outwards of the inner part (136), the inner and outer parts (136, 138) being separated by a bearing (137).

9. Lifting arrangement according to any of the preceding claims, wherein the lifting driving arrangement (30, 32) comprises a lifting motor (30) having a lifting motor shaft and a transmission (32) connecting the lifting motor shaft with the lifting drive shaft (20).

10. A transport cart (1) of a storage and retrieval system, comprising:
a chassis (5), onto which a lifting arrangement according to any of the preceding claims is arranged; and
a carrier plate (6) for carrying goods to be transported on the transport cart (1), the carrier plate (6) being arranged onto the first and second parts (41, 51, 61, 71) of the first and second linkage system (40, 60).

11. Transport cart (1) according to claim 10, comprising a lifting arrangement according to claim 6 or 7, wherein the carrier plate (6) is arranged onto the freely rotating wheels (44, 54, 64, 74) of the first and second parts (41, 51, 61, 71) of the first and second linkage system (40, 60).

12. Transport cart according to claim 10 or 11, wherein
the carrier plate (6) has a horizontal part (6a) for receiving goods and a first and a second vertical part (6b, 6c) that extend substantially perpendicular to the horizontal part (6a), the first and second vertical parts being arranged at opposite ends of the horizontal part (6a),
the transport cart (1) further comprising a first guiding device (7) arranged to the first vertical part (6b) of the carrier plate (6) and a second guiding device (8) arranged to the second vertical part (6c) of the carrier plate (6), the first and second guiding devices (7, 8) being arranged to the first and second vertical part (6b, 6c) so that they face each other,
the chassis (5) having a first vertical side (5a) and a second vertical side, which sides extend substantially parallel to the first and second vertical parts (6b, 6c) of the carrier plate (6), each of the first and second vertical sides (5a) having guiding plates (3a, 3b) extending from its respective first or second vertical side (5a) towards its respective first or second vertical part (6b, 6c) of the carrier plate (6), the guiding plates (3a, 3b) being positioned on their respective first or second vertical side (5a) so that they are on opposite sides of the respective guiding device (7, 8).

13. Transport cart according to claim 10 or 11, wherein
the carrier plate (6) has a horizontal part (6a) for receiving goods and a first and a second vertical part (6b, 6c) that extend substantially perpendicular to the horizontal part (6a), the first and second vertical parts being arranged at opposite ends of the horizontal part (6a),
the chassis (5) having a first vertical side (5a) and a second vertical side, which sides extend substantially parallel to the first and second vertical parts (6b, 6c) of the carrier plate (6), a first guiding device (7) being arranged to the first vertical side (5a) and a second guiding device (8) being arranged to the second vertical side, the first and second guiding devices (7, 8) being arranged to the first and second vertical sides so that they face away from each other,
the transport cart (1) further comprising guiding plates (3a, 3b) arranged to the first vertical part (6b) of the carrier plate (6) and to the second vertical part (6c) of the carrier plate (6), the guiding plates (3a, 3b) extending from the first or second vertical part (6b, 6c) towards the respective first or second vertical side (5a) of the chassis (5), the guiding plates (3a, 3b) being positioned on their respective first or second vertical part (6b, 6c) so that they are on opposite sides of the respective guiding device (7, 8).

14. Transport cart according to claim 12 or 13, wherein the first guiding device (7) is a guiding wheel that is rotationally arranged to the first vertical part (6b) of the carrier plate (6) or to the first vertical side (5a) of the chassis (5), and the second guiding device (8) is a guiding wheel that is rotationally arranged to the second vertical part (6c) of the carrier plate (6) or to the second vertical side of the chassis (5).

## Patentansprüche

1. Hubanordnung (10) eines Transportwagens (1) eines Lagerverwaltungssystems, wobei die Hubanordnung Folgendes umfasst:
eine Hubantriebswelle (20), die ein erstes Ende (20a) und ein zweites Ende (20b) aufweist;
eine Hubantriebsanordnung (30, 32), die mit der Hubantriebswelle (20) verbunden ist, um die Hubantriebswelle zu drehen;
einen ersten und einen zweiten Exzenter (34, 35), wobei der erste Exzenter (34) am ersten Ende (20a) der Hubantriebswelle (20) fixiert ist und der zweite Exzenter (35) am zweiten Ende (20b) der Hubantriebswelle fixiert ist;
ein erstes und ein zweites Verbindungssystem (40, 60), die jeweils einen ersten Teil (41, 61) und einen vom jeweiligen ersten Teil beabstandeten zweiten Teil (51, 71) aufweisen, wobei der zweite Teil (51) des ersten Verbindungssystems (40) über einen ersten Verbindungsarm (50) mit dem ersten Teil (41) des ersten Verbindungssystems (40) verbunden ist und der zweite Teil (71) des zweiten Verbindungssystems (60) über einen zweiten Verbindungsarm (70) mit dem ersten Teil (61) des zweiten Verbindungssystems (60) verbunden ist, wobei der erste und zweite Teil (41, 61, 51, 71) jeweils drehbar an einem Chassis (5) des Transportwagens (1) montierbar ist, wobei der Rand (34b) des ersten Exzenters (34) am ersten Teil (41) des ersten Verbindungssystems (40) anliegt und der Rand (35b) des zweiten Exzenters (35) am ersten Teil (61) des zweiten Verbindungssystems (60) anliegt, sodass, wenn die Hubantriebswelle (20) den ersten und zweiten Exzenter (34, 35) dreht, der Rand des ersten Exzenters (34) eine Pendelbewegung auf das erste Verbindungssystem (40) überträgt und der Rand des zweiten Exzenters (35) eine Pendelbewegung auf das zweite Verbindungssystem (60) überträgt, sodass sich der jeweilige erste und zweite Teil (41, 61, 51, 71) vorwärts und rückwärts um eine Achse drehen, die im Wesentlichen parallel zu einer Achse der Hubantriebswelle (20) ausgerichtet ist,
**dadurch gekennzeichnet, dass** der erste Teil (41) des ersten Verbindungssystems (40) eine erste Öffnung (45) definiert, die den ersten Exzenter (34) umschließt, und dass der erste Teil (61) des zweiten Verbindungssystems (60) eine zweite Öffnung (65) definiert, die den zweiten Exzenter (35) umschließt, und wobei der Rand (34a) des ersten Exzenters (34) am Rand des ersten Teils (41) des ersten Verbindungssystems, der die erste Öffnung (45) definiert, anliegt, und wobei der Rand (35a) des zweiten Exzenters (35) am Rand des ersten Teils (61) des zweiten Verbindungssystems, der die zweite Öffnung (65) definiert, anliegt.

2. Hubanordnung nach Anspruch 1, wobei der erste und zweite Teil (41, 61, 51, 71) des ersten und zweiten Verbindungssystems (40, 60) an einer jeweiligen Verbindungsdrehwelle (42, 62, 52, 72) an einem ersten Endteil (41a, 61a, 51a, 71a) des jeweiligen ersten und zweiten Teils des ersten und zweiten Verbindungssystems (40, 60) angeordnet ist, wobei der erste Endteil (41a) des ersten Teils (41) des ersten Verbindungssystems (40) von einer Position (41b) des ersten Teils (41), an der der Rand (34b) des ersten Exzenters (34) am ersten Teil (41) des ersten Verbindungssystems (40) aufliegt, beabstandet ist, und wobei der erste Endteil (61a) des ersten Teils (61) des zweiten Verbindungssystems (60) von einer Position (61b) des ersten Teils (61) des zweiten Verbindungssystems (60), an der der Rand (35b) des zweiten Exzenters (35) am ersten Teil (61) des zweiten Verbindungssystems (60) anliegt, beabstandet ist.

3. Hubanordnung nach Anspruch 2, wobei der erste Teil (41, 61) und der zweite Teil (51, 71) des ersten und zweiten Verbindungssystems (40, 60) jeweils eine Drehwelle (43, 63, 53, 73) aufweist, die von ihrem jeweiligen ersten Endteil (41a, 61a,51a,71a) verschoben ist, wobei der jeweilige ersten und zweite Verbindungsarm (50, 70) die Drehwelle (43, 63) des ersten Teils (41, 61) mit der Drehwelle (53, 73) des zweiten Teils (51, 71) verbindet.

4. Hubanordnung nach Anspruch 3, wobei der Abstand zwischen der Drehwelle (43, 63) des ersten Teils (41, 61) und dem ersten Endteil (41a, 61a) des ersten Teils (41, 61) des jeweiligen ersten und zweiten Verbindungssystems (40, 60) in etwa derselbe ist wie der Abstand zwischen der Drehwelle (53, 73) des zweiten Teils (51, 71) und dem ersten Endteil (51a, 71a) des zweiten Teils (51, 71) des jeweiligen ersten und zweiten Verbindungssystems (40, 60) .

5. Hubanordnung nach Anspruch 3 oder 4, wobei die Position (41b) des ersten Teils (41) des ersten Verbindungssystems (40), an der der Rand (34b) des ersten Exzenters (34) am ersten Teil (41) des ersten Verbindungssystems (40) anliegt, zwischen dem ersten Endteil (41a) und der Drehwelle (43) des ersten Teils (41) des ersten Verbindungssystems (40) liegt, und wobei die Position (61b) des ersten Teils (61) des zweiten Verbindungssystems (60), an der der Rand (35b) des zweiten Exzenters (35) am ersten Teil (61) des zweiten Verbindungssystems (60) anliegt, zwischen dem ersten Endteil (61a) und der Drehwelle (63) des ersten Teils (61) des zweiten Verbindungssystems (60) liegt.

6. Hubanordnung nach einem der vorstehenden Ansprüche, wobei der erste und zweite Teil (41, 61, 51, 71) des jeweiligen ersten und zweiten Verbindungssystems (40, 60) jeweils sich frei drehende Räder (44, 64, 54, 74) aufweist, die dazu angeordnet sind, eine Trägerplatte zum Tragen von auf dem Transportwagen (1) zu transportierenden Waren aufzunehmen.

7. Hubanordnung nach einem der Ansprüche 3-5 und nach Anspruch 6, wobei die sich frei drehenden Räder (44, 54, 64, 74) derart positioniert sind, dass ihre jeweilige Drehachse an ihrer jeweiligen Drehwelle (43, 53, 63, 73) liegt.

8. Hubanordnung nach einem der vorstehenden Ansprüche, wobei der erste und zweite Exzenter (34, 35) jeweils einen Innenteil (136) und einen Außenteil (138), der radial außerhalb des Innenteils (136) angeordnet ist, umfassen, wobei der Innen- und Außenteil (136, 138) durch ein Lager (137) getrennt sind.

9. Hubanordnung nach einem der vorstehenden Ansprüche, wobei die Hubantriebsanordnung (30, 32) einen Hubmotor (30) umfasst, der eine Hubmotorwelle und ein Getriebe (32), das die Hubmotorwelle mit der Hubantriebswelle (20) verbindet, aufweist.

10. Transportwagen (1) eines Lagerverwaltungssystems, Folgendes umfassend:
ein Chassis (5), auf dem eine Hubanordnung nach einem der vorstehenden Ansprüche angeordnet ist; und
eine Trägerplatte (6) zum Tragen von auf dem Transportwagen (1) zu transportierenden Waren, wobei die Trägerplatte (6) auf dem ersten und zweiten Teil (41, 51, 61, 71) des ersten und zweiten Verbindungssystems (40, 60) angeordnet ist.

11. Transportwagen (1) nach Anspruch 10, eine Hubanordnung nach Anspruch 6 oder 7 umfassend, wobei die Trägerplatte (6) auf den sich frei drehenden Rädern (44, 54, 64, 74) des ersten und zweiten Teils (41, 51, 61, 71) des ersten und zweiten Verbindungssystems (40, 60) angeordnet ist.

12. Transportwagen nach Anspruch 10 oder 11, wobei
die Trägerplatte (6) einen horizontalen Teil (6a) zur Aufnahme von Waren und einen ersten und zweiten vertikalen Teil (6b, 6c), die sich im Wesentlichen senkrecht zum horizontalen Teil (6a) erstrecken, aufweist, wobei der erste und zweite vertikale Teil an entgegengesetzten Enden des horizontalen Teils (6a) angeordnet sind,
der Transportwagen (1), ferner eine erste Führungsvorrichtung (7), die am ersten vertikalen Teil (6b) der Trägerplatte (6) angeordnet ist, und eine zweite Führungsvorrichtung (8), die am zweiten vertikalen Teil (6c) der Trägerplatte (6) angeordnet ist, umfasst, wobei die erste und zweite Führungsvorrichtung (7, 8) am ersten und zweiten vertikalen Teil (6b, 6c) derart angeordnet sind, dass sie einander zugewandt sind,
das Chassis (5) eine erste vertikale Seite (5a) und eine zweite vertikale Seite aufweist, wobei sich die Seiten im Wesentlichen parallel zum ersten und zweiten vertikalen Teil (6b, 6c) der Trägerplatte (6) erstrecken,
wobei die erste und zweite vertikale Seite (5a) jeweils Führungsplatten (3a, 3b) aufweisen, die sich von ihrer jeweiligen ersten oder zweiten vertikalen Seite (5a) zu ihrem jeweiligen ersten oder zweiten vertikalen Teil (6b, 6c) der Trägerplatte (6) erstrecken, wobei die Führungsplatten (3a, 3b) derart auf ihrer jeweiligen ersten oder zweiten vertikalen Seite (5a) angeordnet sind, dass sie sich auf entgegengesetzten Seiten der jeweiligen Führungsvorrichtung (7, 8) befinden.

13. Transportwagen nach Anspruch 10 oder 11, wobei
die Trägerplatte (6) einen horizontalen Teil (6a) zur Aufnahme von Waren und einen ersten und zweiten vertikalen Teil (6b, 6c), die sich im Wesentlichen senkrecht zum horizontalen Teil (6a) erstrecken, aufweist, wobei der erste und zweite vertikale Teil an entgegengesetzten Enden des horizontalen Teils (6a) angeordnet sind,
das Chassis (5) eine erste vertikale Seite (5a) und eine zweite vertikale Seite aufweist, wobei sich die Seiten im Wesentlichen parallel zum ersten und zweiten vertikalen Teil (6b, 6c) der Trägerplatte (6) erstrecken, wobei eine erste Führungsvorrichtung (7) an der ersten vertikalen Seite (5a) angeordnet ist und eine zweite Führungsvorrichtung (8) an der zweiten vertikalen Seite angeordnet ist, wobei die erste und zweite Führungsvorrichtung (7, 8) derart an der ersten und zweiten vertikalen Seite angeordnet sind, dass sie voneinander abgewandt sind,
der Transportwagen (1) ferner Führungsplatten (3a, 3b) umfasst, die am ersten vertikalen Teil (6b) der Trägerplatte (6) und am zweiten vertikalen Teil (6c) der Trägerplatte (6) angeordnet sind, wobei sich die Führungsplatten (3a, 3b) vom ersten oder zweiten vertikalen Teil (6b, 6c) zur jeweiligen ersten oder zweiten vertikalen Seite (5a) des Chassis (5) erstrecken, wobei die Führungsplatten (3a, 3b) derart an ihrem jeweiligen ersten oder zweiten vertikalen Teil (6b, 6c) positioniert sind, dass sie sich auf entgegengesetzten Seiten der jeweiligen Führungsvorrichtung (7, 8) befinden.

14. Transportwagen nach Anspruch 12 oder 13, wobei die erste Führungsvorrichtung (7) ein Führungsrad ist, das drehbar am ersten vertikalen Teil (6b) der Trägerplatte (6) oder an der ersten vertikalen Seite (5a) des Chassis (5) angeordnet ist, und die zweite Führungsvorrichtung (8) ein Führungsrad ist, das drehbar am zweiten vertikalen Teil (6c) der Trägerplatte (6) oder an der zweiten vertikalen Seite des Chassis (5) angeordnet ist.

## Revendications

1. Dispositif de levage (10) d'un chariot de transport (1) d'un système de stockage et de récupération, le dispositif de levage comprenant :
un axe de commande de levage (20) ayant une première extrémité (20a) et une seconde extrémité (20b) ;
un dispositif d'entraînement de levage (30, 32) relié à l'axe de commande de levage (20), pour faire tourner l'axe de commande de levage ;
un premier et un second excentrique (34, 35), le premier excentrique (34) étant fixé à la première extrémité (20a) de l'axe de commande de levage (20) et le second excentrique (35) étant fixé à la seconde extrémité (20b) de l'axe de commande de levage ;
un premier et un second système de liaison (40, 60), chacun ayant une première partie (41, 61) et une seconde partie (51, 71) distante de sa première partie respective, la seconde partie (51) du premier système de liaison (40) étant reliée à la première partie (41) du premier système de liaison (40) par l'intermédiaire d'un premier bras de liaison (50), et la seconde partie (71) du second système de liaison (60) étant reliée à la première partie (61) du second système de liaison (60) par l'intermédiaire d'un second bras de liaison (70), les première et seconde parties (41, 61, 51, 71) pouvant chacune être montée de manière rotative sur un châssis (5) du chariot de transport (1), moyennant quoi une périphérie (34b) du premier excentrique (34) repose contre la première partie (41) du premier système de liaison (40) et une périphérie (35b) du second excentrique (35) repose contre la première partie (61) du second système de liaison (60) de sorte que lorsque l'axe de commande de levage (20) fait tourner le premier et le second excentrique (34, 35), la périphérie du premier excentrique (34) amène un mouvement de va-et-vient sur le premier système de liaison (40) et la périphérie du second excentrique (35) amène un mouvement de va-et-vient sur les seconds systèmes de liaison (60) de sorte que les première et seconde parties (41, 61, 51, 71) respectives tournent d'avant en arrière autour d'un axe orienté sensiblement parallèlement à un axe de l'axe de commande de levage (20),
**caractérisé en ce que** la première partie (41) du premier système de liaison (40) définit une première ouverture (45) qui renferme le premier excentrique (34), et la première partie (61) du second système de liaison (60) définit une seconde ouverture (65) qui renferme le second excentrique (35), et moyennant quoi la périphérie (34a) du premier excentrique (34) repose contre une périphérie de la première partie (41) du premier système de liaison définissant la première ouverture (45), et la périphérie (35a) du second excentrique (35) repose contre une périphérie de la première partie (61) du second système de liaison définissant la seconde ouverture (65).

2. Dispositif de levage selon la revendication 1, la première et la seconde partie (41, 61, 51, 71) du premier et du second système de liaison (40, 60) étant disposées sur un arbre tournant de liaison (42, 62, 52, 72) respectif au niveau d'une première partie d'extrémité (41a, 61a, 51a, 71a) des première et seconde parties respectives des premier et second systèmes de liaison (40, 60), laquelle première partie d'extrémité (41a) de la première partie (41) du premier système de liaison (40) étant espacée d'une position (41b) de la première partie (41) où la périphérie (34b) du premier excentrique (34) repose contre la première partie (41) du premier système de liaison (40), et laquelle première partie d'extrémité (61a) de la première partie (61) du second système de liaison (60) étant espacée d'une position (61b) de la première partie (61) du second système de liaison (60) où la périphérie (35b) du second excentrique (35) repose contre la première partie (61) du second système de liaison (60).

3. Dispositif de levage selon la revendication 2, les premières parties (41, 61) et les secondes parties (51, 71) du premier et du second système de liaison (40, 60) ayant chacune un arbre tournant (43, 63, 53, 73) déplacé depuis sa première partie d'extrémité (41a, 61a, 51a, 71a) respective, le premier et le second bras de liaison (50, 70) respectifs reliant l'arbre tournant (43, 63) de la première partie (41, 61) à l'arbre tournant (53, 73) de la seconde partie (51, 71).

4. Dispositif de levage selon la revendication 3, une distance entre l'arbre tournant (43, 63) de la première partie (41, 61) et la première partie d'extrémité (41a, 61a) de la première partie (41, 61) des premier et second systèmes de liaison (40, 60) respectifs étant approximativement la même qu'une distance entre l'arbre tournant (53, 73) de la seconde partie (51, 71) et la première partie d'extrémité (51a, 71a) de la seconde partie (51, 71) des premier et second systèmes de liaison (40, 60) respectifs.

5. Dispositif de levage selon la revendication 3 ou 4, la position (41b) de la première partie (41) du premier système de liaison (40) où la périphérie (34b) du premier excentrique (34) repose contre la première partie (41) du premier système de liaison (40) se trouvant entre la première partie d'extrémité (41a) et l'arbre tournant (43) de la première partie (41) du premier système de liaison (40), et la position (61b) de la première partie (61) du second système de liaison (60) où la périphérie (35b) du second excentrique (35) repose contre la première partie (61) du second système de liaison (60) se trouvant entre la première partie d'extrémité (61a) et l'arbre tournant (63) de la première partie (61) du second système de liaison (60).

6. Dispositif de levage selon l'une quelconque des revendications précédentes, la première et la seconde partie (41, 61, 51, 71) du premier et du second système de liaison (40, 60) respectif ayant chacune des roues à rotation libre (44, 64, 54, 74) conçues pour recevoir une plaque de support pour porter des marchandises à transporter sur le chariot de transport (1).

7. Dispositif de levage selon l'une quelconque des revendications 3 à 5 et selon la revendication 6, les roues à rotation libre (44, 54, 64, 74) étant positionnées de sorte à avoir leur axe de rotation respectif au niveau de leur arbre tournant (43, 53, 63, 73) respectif.

8. Dispositif de levage selon l'une quelconque des revendications précédentes, le premier et le second excentrique (34, 35) comprenant chacun une partie intérieure (136) et une partie extérieure (138) située radialement à l'extérieur de la partie intérieure (136), les parties intérieure et extérieure (136, 138) étant séparées par un palier (137).

9. Dispositif de levage selon l'une quelconque des revendications précédentes, le dispositif d'entraînement de levage (30, 32) comprenant un moteur de levage (30) ayant un arbre de moteur de levage et une transmission (32) reliant l'arbre de moteur de levage à l'axe de commande de levage (20).

10. Chariot de transport (1) d'un système de stockage et de récupération, comprenant :
un châssis (5), sur lequel est disposé un dispositif de levage selon l'une quelconque des revendications précédentes ; et
une plaque de support (6) pour porter des marchandises à transporter sur le chariot de transport (1), la plaque de support (6) étant disposée sur les première et seconde parties (41, 51, 61, 71) des premier et second systèmes de liaison (40, 60).

11. Chariot de transport (1) selon la revendication 10, comprenant un dispositif de levage selon la revendication 6 ou 7, la plaque de support (6) étant disposée sur les roues à rotation libre (44, 54, 64, 74) des première et seconde parties (41, 51, 61, 71) du premier et du second système de liaison (40, 60).

12. Chariot de transport selon la revendication 10 ou 11,
la plaque de support (6) ayant une partie horizontale (6a) destinée à recevoir des marchandises et une première et une seconde parties verticales (6b, 6c) qui s'étendent sensiblement perpendiculairement à la partie horizontale (6a), les première et seconde parties verticales étant disposées au niveau d'extrémités opposées de la partie horizontale (6a),
le chariot de transport (1) comprenant en outre un premier dispositif de guidage (7) disposé sur la première partie verticale (6b) de la plaque de support (6) et un second dispositif de guidage (8) disposé sur la seconde partie verticale (6c) de la plaque de support (6), les premier et second dispositifs de guidage (7, 8) étant disposés sur la première et la seconde partie verticale (6b, 6c) de sorte à se faire face,
le châssis (5) ayant un premier côté vertical (5a) et un second côté vertical, lesquels côtés s'étendent sensiblement parallèlement aux première et seconde parties verticales (6b, 6c) de la plaque de support (6), chacun des premier et second côtés verticaux (5a) ayant des plaques de guidage (3a, 3b) s'étendant depuis son premier ou second côté vertical (5a) respectif vers sa première ou seconde partie verticale (6b, 6c) respective de la plaque de support (6), les plaques de guidage (3a, 3b) étant positionnées sur leur premier ou second côté vertical (5a) respectif de sorte qu'elles se trouvent sur des côtés opposés du dispositif de guidage (7, 8) respectif.

13. Chariot de transport selon la revendication 10 ou 11,
la plaque de support (6) ayant une partie horizontale (6a) destinée à recevoir des marchandises et une première et une seconde parties verticales (6b, 6c) qui s'étendent sensiblement perpendiculairement à la partie horizontale (6a), les première et seconde parties verticales étant disposées au niveau d'extrémités opposées de la partie horizontale (6a),
le châssis (5) ayant un premier côté vertical (5a) et un second côté vertical, lesquels côtés s'étendant sensiblement parallèlement aux première et seconde parties verticales (6b, 6c) de la plaque de support (6), un premier dispositif de guidage (7) étant disposé sur le premier côté vertical (5a) et un second dispositif de guidage (8) étant disposé sur le second côté vertical, les premier et second dispositifs de guidage (7, 8) étant disposés sur les premier et second côtés verticaux de sorte qu'ils soient opposés l'un à l'autre,
le chariot de transport (1) comprenant en outre des plaques de guidage (3a, 3b) disposées sur la première partie verticale (6b) de la plaque de support (6) et sur la seconde partie verticale (6c) de la plaque de support (6), les plaques de guidage (3a, 3b) s'étendant depuis la première ou la seconde partie verticale (6b, 6c) vers le premier ou le second côté vertical (5a) respectif du châssis (5), les plaques de guidage (3a, 3b) étant positionnées sur leur première ou seconde partie verticale (6b, 6c) respective de sorte qu'elles se trouvent sur des côtés opposés du dispositif de guidage (7, 8) respectif.

14. Chariot de transport selon la revendication 12 ou 13, le premier dispositif de guidage (7) étant une roue de guidage qui est disposée de manière rotative sur la première partie verticale (6b) de la plaque de support (6) ou sur le premier côté vertical (5a) du châssis (5), et le second dispositif de guidage (8) étant une roue de guidage qui est disposée de manière rotative sur la seconde partie verticale (6c) de la plaque de support (6) ou sur le second côté vertical du châssis (5).
